(19) Europäisches Patentamt / European Patent Office / Office européen des brevets

(11) **EP 2 621 051 A1**

(12) **DEMANDE DE BREVET EUROPEEN**

(43) Date de publication:
**31.07.2013 Bulletin 2013/31**

(51) Int Cl.:
*H02J 7/00* (2006.01)        *G01R 31/36* (2006.01)

(21) Numéro de dépôt: **13152501.6**

(22) Date de dépôt: **24.01.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **25.01.2012  FR 1250726**

(71) Demandeur: **Accuwatt**
**91400 Saclay (FR)**

(72) Inventeur: **Combier, Michel**
**91190 Gif-sur-Yvette (FR)**

(74) Mandataire: **Pontet Allano & Associes**
**Parc Orsay Université**
**25, rue Jean-Rostand**
**91893 Orsay Cedex (FR)**

(54) **Dispositif de gestion de charge d'une batterie à haute précision, et procédé mis en oeuvre par ce dispositif**

(57)    La présente invention concerne un dispositif (10) de gestion de charge d'une batterie (1) munie de plusieurs cellules (2), chaque cellule ayant sa propre capacité et sa propre charge. Selon l'invention, le dispositif peut comprendre de manière avantageuse :
- pour chaque cellule, des moyens pour mesurer (5, 6, 7) la charge de cette cellule, au moins en fonction de l'intensité d'un courant passant à travers cette cellule ;

des moyens (7) pour comparer les charges mesurées des cellules, et/ou
- un chargeur principal (3) agencé pour charger de manière globale toutes les cellules en leur fournissant un courant de charge principal commun à toutes les cellules ; pour chaque cellule, un chargeur complémentaire (8) agencé pour charger spécifiquement cette cellule en lui fournissant un courant complémentaire.

FIG. 2

**Description**

**Domaine technique**

. La présente invention concerne un dispositif de gestion de charge de batterie, et un procédé de gestion de charge de batterie mis en oeuvre par un tel dispositif.

. Un tel dispositif peut permettre par exemple à un utilisateur de gérer la charge des batteries munies de cellules reliées en série, chaque cellule ayant sa propre capacité et sa propre charge. Le domaine de l'invention est plus particulièrement celui des batteries de hautes performances et de nouvelles technologies.

. Le domaine de l'invention est notamment la charge de tout système de batterie réclamant efficacité énergétique, faible prix et sûreté de fonctionnement, tel que :

- dans le domaine des Transports :

  • Vélos à assistance électrique
  • Scooters
  • Véhicules pour handicapés
  • Voiturettes électriques
  • Voitures électriques
  • Trains et tramways

- dans le domaine de la sécurité :

  • Batteries portables de sécurité
  • Batteries de sauvegarde informatique

- dans le domaine des télécommunications :

  • Réseaux
  • Balises.

**Etat de la technique antérieure**

. La gestion de batteries de hautes performances et de nouvelles technologies peut être de mise en oeuvre difficile du fait :

- de la grande sensibilité des procédés électrochimiques mis en oeuvre,
- de la grande quantité d'énergie stockée par unité de volume, et
- de la recherche constante de sécurité des matériels et des personnes.

. Une batterie 100 est la plupart du temps constituée d'éléments (appelés « cellules », chaque cellule 200 ayant sa propre capacité et sa propre charge) disposés en série.

. Dans un cas sans système de gestion de charge de la batterie (ou BMS pour « Battery Management System »), pour charger une telle batterie, on peut utiliser un chargeur simple, c'est-à-dire ne surveillant que la tension totale aux bornes de la batterie, et qui ne pourra pas détecter une éventuelle situation de surcharge d'une des cellules par rapport à d'autres cellules. En effet les diverses cellules d'une batterie ne sont jamais parfaitement identiques et jamais chargés uniformément. Le scénario classique en l'absence de BMS est en général le suivant : lors d'une charge une des cellules se trouve en situation de surcharge (tension à ses bornes au-delà de la limite de pleine charge). Le chargeur ne le détecte pas car plusieurs autres cellules ne sont pas complètement chargées (tension inférieure à la limite de surcharge). La charge est maintenue et la cellule en question est détruite. Dans le meilleur des cas (si la cellule ne prend pas feu) celui-ci se mettra en court-circuit lors de la décharge suivante. Lors de la charge suivante la tension aux bornes de la batterie restera systématiquement inférieure à la tension nominale du fait qu'une des cellules est en court-circuit. Le chargeur maintiendra la charge des autres cellules bien au-delà de la limite et provoquera la surcharge de tous les autres cellules, ce qui conduira immanquablement à la destruction totale de la batterie par explosion ou à un incendie. Ce scénario est à l'origine e nombreux accidents et destruction de véhicules et usines entières.

. C'est pourquoi les batteries de nouvelle technologie (notamment de haute densité d'énergie) dotées de plusieurs cellules doivent disposer d'un système de gestion, appelé BMS, permettant :

• de surveiller individuellement les cellules
• d'équilibrer leur charge en permanence.

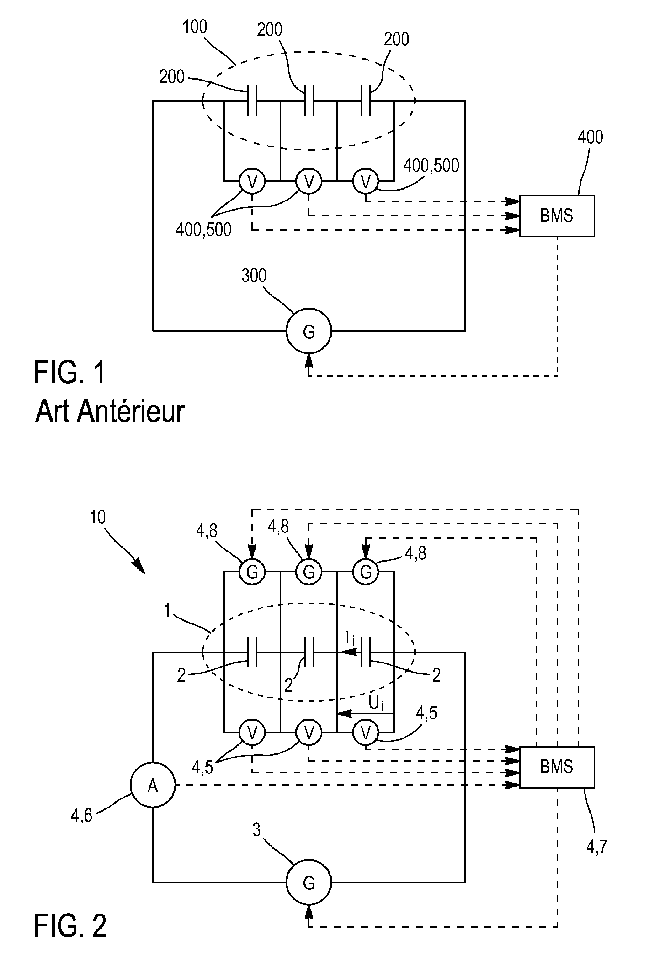

. En référence à la figure 1, dans un cas avec système de gestion de charge BMS, pour charger une telle batterie 100, on charge la batterie 100 avec un générateur de courant 300. Le système de gestion 400 comprend, pour chaque cellule 200, des moyens 500 pour mesurer la tension aux bornes de cette cellule. La tension aux bornes de la cellule est considéré comme représentative de la charge de cette cellule, mais cette approximation n'est pas toujours satisfaisante (problème de précision). Ainsi, en mesurant la tension aux bornes de toutes les cellules, le BMS peut détecter une différence de charge entre les cellules. Plusieurs techniques permettent ensuite de résoudre un déséquilibre de charge entre les cellules :

- par une méthode d'équilibrage à résistance : dans ce cas, chaque cellule est équilibrée en lui retirant une partie du courant de charge général. Ce courant est dérivé vers une résistance de puissance qui transforme cette énergie en chaleur. Cette technique simple s'applique à des petites batteries où la dissipation des résistances reste acceptable et où la déperdition d'énergie n'est pas primordiale ;
- par une méthode d'équilibrage à capacité volante : dans ce cas, on utilise un condensateur que l'on charge en prélevant de l'énergie sur un des éléments les plus chargés et en l'injectant sur un des éléments les moins chargés. Avec cette technique, le BMS est encore très compact et bien adapté aux petites batteries, mais engendre toujours des pertes d'énergie (moitié moindre qu'avec le système à résistances) et dissipations thermiques dans la batterie ce qui est très défavorable à la sécurité et la durabilité ;

- par une méthode d'équilibrage à self et transformateur : dans ce cas, on transfère de l'énergie des éléments les plus chargés vers les éléments les moins chargés comme avec la capacité volante mais en stockant l'énergie sous forme magnétique ce qui améliore le rendement mais complique le dispositif. Cette technique a une très bonne efficacité énergétique mais est très complexe à mettre en oeuvre et s'applique principalement à des systèmes très sophistiqués, militaires et spatiaux, ou à des batteries de puissance.

. Le but de l'invention est de proposer un dispositif ou un procédé de gestion de charge d'une batterie :

- plus précis que ceux de l'état de la technique antérieure, et/ou
- moins complexe à mettre en oeuvre que ceux de l'état de la technique antérieure, et/ou
- avec moins de déperdition d'énergie et/ou de dissipations thermiques que ceux de l'état de la technique antérieure.

**Exposé de l'invention**

. Cet objectif est atteint avec un dispositif de gestion de charge d'une batterie munie de plusieurs cellules, chaque cellule ayant sa propre capacité et sa propre charge.

. Le dispositif selon l'invention peut comprendre, pour chaque cellule, des moyens pour mesurer la charge de cette cellule, c'est-à-dire pour effectuer une mesure de la charge de cette cellule. Cette mesure peut comprendre :

- une mesure approximative de la charge de la cellule par une mesure de la tension aux bornes de cette cellule mais pas de l'intensité du courant passant à travers cette cellule : les moyens pour mesurer la charge d'une cellule peuvent être agencés pour mesurer cette charge en fonction de la tension aux bornes de cette cellule mais pas d'un courant passant à travers cette cellule
- une mesure de la charge de la cellule par une détermination de la charge réelle de la cellule (par exemple par méthode coulométrique ou par méthode par couple de courant et tension décrites par la suite), au moins en fonction d'une mesure de l'intensité du courant passant à travers cette cellule, et éventuellement en outre en fonction d'une mesure de la tension aux bornes de cette cellule et/ou en fonction d'une mesure de température de cette cellule, pour une estimation plus précise de cette charge. Cette solution présente, sur les solutions plus simples basées sur les comparaisons de tensions, l'avantage d'être beaucoup plus précise et d'optimiser le fonctionnement de chargeurs complémentaires. En effet pour certaines technologies, dont le lithium, la variation de tension en fonction de l'état de charge est très faible sur une bonne partie du cycle de charge ce qui rend aléatoire la comparaison d'état de charge.

. Les moyens pour mesurer la charge d'une cellule sont de préférence agencés pour mesurer cette charge au moins en fonction de l'intensité d'un courant passant à travers cette cellule.

. Pour chaque cellule, le dispositif selon l'invention peut comprendre :

- des moyens pour mesurer l'intensité du courant passant à travers cette cellule, de préférence reliés en série en bout de chaîne des cellules (elles même reliées en série), et de préférence commun à toutes les cellules, et/ou
- des moyens pour mesurer la tension aux bornes de cette cellule, et de préférence spécifiques à cette cellule, et/ou
- des moyens pour mesurer la température de cette cellule, et de préférence spécifiques à cette cellule,

de préférence en fonction des mesures qui sont utiles à la mesure (c'est-à-dire au calcul ou à la détermination) de la charge de cette cellule. Bien entendu, pour chaque cellule, les moyens de mesure de charge d'une cellule sont de préférence agencés pour mesurer ou déterminer cette charge pour un instant donné en fonction d'une mesure d'intensité et/ou de tension et/ou de température à ce même instant donné. Pour chaque cellule, les moyens de mesure de charge de cette cellule sont de préférence agencés pour que chaque mesure d'intensité et/ou de tension et/ou de température soit effectuée en continu ou périodiquement de manière à déterminer la charge de chaque cellule en continu ou périodiquement, de préférence en temps réel.

. Les moyens pour mesurer la charge d'une cellule peuvent être agencés pour mesurer cette charge à partir de l'intensité du courant passant à travers cette cellule et de la tension aux bornes de cette cellule (et éventuellement en outre à partir de la température de cette cellule), de préférence par au moins une méthode par couple de courant et tension. Les moyens pour mesurer la charge d'une cellule sont de préférence agencés pour mesurer cette charge à partir de l'intensité du courant passant à travers cette cellule et de la tension aux bornes de cette cellule (et éventuellement en outre à partir de la température de cette cellule), de préférence par plusieurs méthodes par couple de courant et tension.

. Les moyens pour mesurer la charge d'une cellule peuvent être agencés pour mesurer cette charge à partir de l'intensité du courant passant à travers cette cellule (et éventuellement en outre à partir de la température de cette cellule) mais pas de la tension aux bornes de cette cellule, de préférence par une méthode coulométrique.

. De manière générale, les moyens pour mesurer la charge d'une cellule peuvent être agencés pour mesurer cette charge à partir de la température de cette cellule.

. Le dispositif selon l'invention peut comprendre en outre des moyens agencés pour corriger la mesure de la charge d'une cellule par une méthode coulométrique en fonction de la mesure de la charge de cette cellule par l'au moins une méthode par couple de courant et tension, de préférence pour corriger la mesure de la charge d'une cellule en fonction d'une comparaison d'une erreur d'estimation de la charge par la méthode coulométrique et d'une erreur d'estimation de la charge par chaque méthode par couple de courant et tension.

. Le dispositif selon l'invention peut comprendre des moyens pour comparer les charges mesurées des cellules. Les moyens pour comparer les charges mesurées des cellules peuvent être agencés pour comparer ces charges :

- par comparaison des tensions individuelles aux bornes de chacune de ces cellules, de préférence dans le cas d'une mesure approximative de la charge d'une cellule par une mesure de la tension aux bornes de cette cellule, ou
- par comparaison des états de charge réels déterminés pour chaque cellule (par exemple par méthode coulométrique ou par méthode par couple de courant et tension décrites par la suite).

. Le dispositif selon l'invention peut comprendre en outre des moyens pour rééquilibrer entre elles les charges des cellules en cas de déséquilibre des charges comparées.

. Le dispositif selon l'invention peut comprendre en outre un chargeur principal agencé pour charger de manière globale toutes les cellules en leur fournissant un courant de charge principal commun à toutes les cellules.

. Le dispositif selon l'invention peut comprendre des moyens pour contrôler le chargeur principal en fonction de la charge globale de l'ensemble des cellules. Cette charge globale peut typiquement être évaluée soit en fonction d'un courant passant à travers les cellules et de la tension aux bornes de l'ensemble des cellules, ou plus simplement en fonction de la tension aux bornes de l'ensemble des cellules mais pas d'un courant passant à travers les cellules, ou encore en sommant les charges mesurées de toutes les cellules. Les moyens pour contrôler le chargeur principal sont de préférence agencés pour arrêter la fourniture du courant de charge principal lorsque la batterie atteint un seuil de fin charge (typiquement entre 95 % et 99,9%, de préférence entre 95% et 99%).

. Le dispositif selon l'invention peut comprendre en outre pour chaque cellule, un chargeur complémentaire agencé pour charger spécifiquement cette cellule en lui fournissant un courant complémentaire, et de préférence agencé pour fournir ce courant complémentaire de manière additionnelle au courant de charge principal.

. Le dispositif selon l'invention peut comprendre, pour chaque cellule, un contrôleur pour contrôler le chargeur complémentaire de cette cellule en fonction d'un résultat de mesure de charge de cette cellule et/ou de comparaison des charges des cellules. Le contrôleur de chaque chargeur complémentaire est de préférence commun à tous les chargeurs complémentaires.

. De préférence, pour plus de précision, chaque chargeur complémentaire (contrôlé par son contrôleur) est agencé pour ne pas fournir de courant complémentaire à la cellule à laquelle il est associé lors d'une mesure de l'intensité du courant passant par cette cellule.

. Pour chaque cellule, le chargeur complémentaire de cette cellule (contrôlé par son contrôleur) est de préférence agencé pour charger cette cellule en cas de retard de charge de cette cellule par rapport aux autres cellules, de préférence jusqu'à un équilibrage de la charge de cette cellule par rapport aux charges des autres cellule. On entend par retard de charge de préférence un retard de charge au-delà d'un certain seuil d'écart (typiquement entre 0,1 % et 5%, de préférence entre 0,5% et 2%) par rapport à la cellule la plus chargée. On entend par équilibrage de charge un retard de charge au dessous de ce seuil d'écart par rapport à la cellule la plus chargée.

. Chaque chargeur complémentaire a de préférence une puissance de charge inférieure à la puissance de charge du chargeur principal, typiquement au moins dix fois inférieure.

. Suivant encore un autre aspect de l'invention, il est proposé un procédé de gestion de charge d'une batterie munie de plusieurs cellules, chaque cellule ayant sa propre capacité et sa propre charge.

. Le procédé selon l'invention peut comprendre, pour chaque cellule, une mesure de la charge de cette cellule. Cette mesure peut comprendre :

- une mesure approximative de la charge de la cellule par une mesure de la tension aux bornes de cette cellule mais pas de l'intensité du courant passant à travers cette cellule : on mesure cette charge en fonction de la tension aux bornes de cette cellule mais pas d'un courant passant à travers cette cellule ; et/ou
- une mesure de la charge de la cellule par une détermination de la charge réelle de la cellule (par exemple par méthode coulométrique ou par méthode par couple de courant et tension décrites par la suite), au moins en fonction d'une mesure de l'intensité du courant passant à travers cette cellule, et éventuellement en outre en fonction d'une mesure de la tension aux bornes de cette cellule et/ou en fonction d'une mesure de température de cette cellule, pour une estimation plus précise de cette charge. Cette solution présente, sur les solutions plus simples basées sur les comparaisons de tensions, l'avantage d'être beaucoup plus précise et d'optimiser le fonctionnement de chargeurs complémentaires. En effet pour certaines technologies, dont le lithium, la variation de tension en fonction de l'état de charge est très faible sur une bonne partie du cycle de charge ce qui rend aléatoire la comparaison d'état de charge.

. La mesure de la charge d'une cellule comprend de préférence une mesure de cette charge au moins en fonction de l'intensité d'un courant passant à travers cette cellule.

. Le procédé selon l'invention peut comprendre pour chaque cellule :

- une mesure de l'intensité du courant passant à travers cette cellule, de préférence par des moyens de mesure d'intensité reliés en série en bout de chaîne des cellules (elles même reliées en série), et de préférence commune à toutes les cellules et/ou
- une mesure de la tension aux bornes de cette cellule, et de préférence spécifique à cette cellule, et/ou
- une mesure de la température de cette cellule, et de préférence spécifique à cette cellule,

de préférence en fonction des mesures qui sont utiles à la mesure (c'est-à-dire au calcul ou à la détermination) de la charge de cette cellule. Bien entendu, selon l'invention, pour chaque cellule, une charge d'une cellule est de préférence mesurée ou déterminée pour un instant donné en fonction d'une mesure d'intensité et/ou de tension et/ou de température à ce même instant donné. Chaque mesure d'intensité et/ou de tension et/ou de température est effectuée de préférence en continu ou périodiquement de manière à déterminer la charge de chaque cellule en continu ou périodiquement, de préférence en temps réel.

. La mesure de la charge d'une cellule peut comprendre une mesure de cette charge à partir de l'intensité du courant passant à travers cette cellule et de la tension aux bornes de cette cellule (et éventuellement en outre à partir de la température de cette cellule), de préférence par au moins une méthode par couple de courant et tension. La mesure de la charge d'une cellule comprend de préférence une mesure de cette charge à partir de l'intensité du courant passant à travers cette cellule et de la tension aux bornes de cette cellule (et éventuellement en outre à partir de la température de cette cellule), de préférence par plusieurs méthodes par couple de courant et tension.

. La mesure de la charge d'une cellule peut comprendre une mesure de cette charge à partir de l'intensité du courant passant à travers cette cellule (et éventuellement en outre à partir de la température de cette cellule) mais pas de la tension aux bornes de cette cellule, de préférence par une méthode coulométrique.

. De manière générale, la mesure de la charge d'une cellule peut comprendre une mesure de cette charge à partir de la température de cette cellule.

. Le procédé selon l'invention peut comprendre en outre une correction de la mesure de la charge d'une cellule par une méthode coulométrique en fonction de la mesure de la charge de cette cellule par l'au moins une méthode par couple de courant et tension, cette correction étant de préférence une fonction d'une comparaison d'une erreur d'estimation de la charge par la méthode coulométrique et d'une erreur d'estimation de la charge par chaque méthode par couple de courant et tension.

. Le procédé selon l'invention peut comprendre une comparaison des charges mesurées des cellules. La comparaison des charges mesurées des cellules peut comprendre une comparaison de ces charges :

- par comparaison des tensions individuelles aux bornes de chacune de ces cellules, de préférence dans le cas d'une mesure approximative de la charge d'une cellule par une mesure de la tension aux bornes de cette cellule, ou
- par comparaison des états de charge réels déterminés pour chaque cellule (par exemple par méthode coulométrique ou par méthode par couple de courant et tension décrites par la suite).

. Le procédé selon l'invention peut comprendre en outre un rééquilibrage entre elles des charges des cellules en cas de déséquilibre des charges comparées.

. Le procédé selon l'invention peut comprendre en outre un chargement principal, par un chargeur principal, de toutes les cellules de manière globale en leur fournissant un courant de charge principal commun à toutes les cellules.

. Le procédé selon l'invention peut comprendre un contrôle du chargeur principal en fonction de la charge globale de l'ensemble des cellules. Cette charge globale peut typiquement être évaluée soit en fonction d'un courant passant à travers les cellules et de la tension aux bornes de l'ensemble des cellules, ou plus simplement en fonction de la tension aux bornes de l'ensemble des cellules mais pas d'un courant passant à travers les cellules, ou encore en sommant les charges mesurées de toutes les cellules. Le contrôle du chargeur principal comprend de préférence un arrêt de la fourniture du courant de charge principal lorsque la batterie atteint un seuil de fin charge (typiquement entre 95 % et 99,9%, de préférence entre 95% et 99%).

. Le procédé selon l'invention peut comprendre en outre pour au moins une des cellules (de préférence pour toutes les cellules en retard de charge par rapport aux autres cellules) un chargement complémentaire de cette au moins une cellule. Chaque chargement complémentaire d'une cellule est effectué par un chargeur complémentaire spécifique à cette cellule, qui fournit à cette cellule (mais pas aux autres cellules) un courant complémentaire, et de préférence de manière additionnelle au courant de charge principal.

. Le procédé selon l'invention peut comprendre, pour chaque cellule, un contrôle du chargeur complémentaire et donc de la charge complémentaire de cette cellule en fonction d'un résultat de mesure de charge de cette cellule et/ou de comparaison des charges des cellules. Le contrôleur de chaque chargeur complémentaire est de préférence commun à tous les chargeurs complémentaires.

. La mesure de charge d'une cellule peut comprendre une mesure de l'intensité du courant passant par cette cellule. De préférence, pour plus de précision, chaque chargeur complémentaire (contrôlé par son contrôleur) ne fournit pas de courant complémentaire à la cellule à laquelle il est associé lors d'une mesure de l'intensité du courant passant par cette cellule.

. Pour chaque cellule, le chargeur complémentaire de cette cellule (contrôlé par son contrôleur) charge de préférence cette cellule en cas de retard de charge de cette cellule par rapport aux autres cellules, de préférence jusqu'à un équilibrage de la charge de cette cellule par rapport aux charges des autres cellules.

. Chaque chargeur complémentaire a de préférence une puissance de charge inférieure à la puissance de charge du chargeur principal, typiquement au moins dix fois inférieure.

**Description des figures et modes de réalisation**

. D'autres avantages et particularités de l'invention apparaîtront à la lecture de la description détaillée de mises en oeuvre et de modes de réalisation nullement limitatifs, et des dessins annexés suivants :

- la figure 1 illustre un dispositif de gestion de charge selon l'état de la technique antérieure,
- la figure 2 illustre un mode de réalisation préféré de dispositif de gestion de charge selon l'invention,
- la figure 3 illustre l'architecture interne d'une unité 7 de traitement du dispositif de la figure 2 dans une première variante,
- la figure 4 illustre l'architecture interne d'une unité 7 de traitement du dispositif de la figure 2 dans une deuxième variante,
- la figure 5 illustre l'évolution de la valeur de la résistance interne Ri d'une cellule d'une batterie en fonction de la charge Qi de cette cellule, pour différentes températures T1 et T2, et
- la figure 6 illustre l'évolution de la charge Qi d'une cellule d'une batterie en fonction de la tension Ui aux bornes de cette cellule, pour différentes températures T1 et T2 et différents Intensités I1 et I2 traversant cette cellule.

. On va donc tout d'abord décrire, en référence aux figures 2 à 6, un mode de réalisation préféré de dispositif 10 de gestion de charge selon l'invention mettant en oeuvre un mode de réalisation préféré de procédé de gestion de charge selon l'invention.

. Le dispositif 10 est agencé pour charger une batterie 1 munie de plusieurs cellules, chaque cellule 2 ayant sa propre capacité Ci et sa propre charge Qi et sa propre résistance interne Ri. Les cellules 2 de la batterie sont électriquement reliées en série.

. Le dispositif 10 comprend :

- un chargeur principal 3 (typiquement un générateur de courant) agencé pour charger de manière globale toutes les cellules, et
- un système de gestion BMS 4.

. Le système de gestion BMS 4 comprend :

- pour chaque cellule 2, des moyens 5, 6, 7 pour mesurer la charge de cette cellule ; ces moyens de mesure mesurent typiquement la charge sous la forme d'un taux de charge par rapport à une charge maximum, exprimé en % ;
- des moyens 7 pour comparer les charges mesurées des cellules, et
- des moyens 7, 8 pour rééquilibrer entre elles les charges des cellules en cas de déséquilibre des charges comparées.

. Les cellules de la batterie sont de préférence toutes d'un même type. Chaque cellule de la batterie appartient à un type de technologie de cellule parmi :

- les technologies électrochimiques, de préférence de technologies lithium et leurs diverses variante : Lithium-polymère, Lithiumion, Lithium-Cobalt, Lithium-Manganèse, Lithium Phosphate de Fer. De manière générale, toutes les chimies de cellules sont concernées par cette invention à partir du moment où l'on cherche à obtenir des tensions de service élevées par la mise en série de plusieurs cellules.
- les technologies autres qu'électrochimiques, telle qu'une « super capacité ».

. Chaque cellule est donc une cellule électrochimique ou une « super capacité ».

. Pour chaque cellule, les moyens 5, 6, 7 pour mesurer la charge de cette cellule comprennent :

- des moyens 6 pour mesurer l'intensité Ii d'un courant passant à travers cette cellule ; ces moyens 6 comprennent typiquement un ampèremètre branché en série avec la batterie, c'est-à-dire en bout de chaîne des cellules elles même reliées en série ; ces moyens 6 sont communs à toutes les cellules
- des moyens 5 pour mesurer la tension Ui aux bornes de cette cellule ; ces moyens 5 comprennent typiquement un voltmètre banché aux bornes de cette cellule,

- des moyens (non représentés) pour mesurer la température Ti de cette cellule, comprenant typiquement une sonde de température disposée contre ou à l'intérieur de cette cellule,
- une unité de calcul et de traitement 7, agencée pour calculer ou déterminer la charge de cette cellule à partir de données mesurées par le dispositif 10, et comprenant des moyens électroniques et/ou informatiques (i.e. carte électronique ou analogique dédiée), microprocesseur, unité centrale d'un ordinateur, ...) agencés pour calculer ou déterminer la charge de chaque cellule. Cette unité 7 est commune à toutes les cellules.

. Bien entendu, pour chaque cellule, les moyens de mesure de charge d'une cellule sont agencés pour mesurer ou déterminer cette charge pour un instant donné en fonction d'une mesure d'intensité et/ou de tension et/ou de température à ce même instant donné. Pour chaque cellule, les moyens de mesure de charge de cette cellule sont agencés pour que chaque mesure d'intensité et/ou de tension et/ou de température soit effectuée en quasi-continu de manière à déterminer la charge de chaque cellule en quasi-continu, en temps réel.

. Ainsi, l'unité 7 mesure en temps réel les taux de charge respectifs des différentes cellules.

. Pour chaque cellule, les moyens 7 pour comparer les charges mesurées des cellules comprennent l'unité 7, qui est donc en outre agencée pour comparer les charges mesurées.

. Pour chaque cellule, les moyens 7, 8 pour rééquilibrer entre elles les charges des cellules comprennent :

- pour chaque cellule, un chargeur complémentaire 8 (typiquement un générateur de courant) agencé pour charger spécifiquement cette cellule en lui fournissant un courant complémentaire de manière additionnelle au courant de charge principal, c'est-à-dire agencé pour charger uniquement cette cellule et pas les autres cellules ; ainsi, on assure l'équilibrage de la batterie 1 par l'installation de chargeurs 8 de faible puissance sur chaque élément 2 de batterie ; les chargeurs complémentaires, aussi appelés « mini-chargeurs » ou « surchargeurs », n'ont pas pour rôle de charger entièrement à eux seul leur cellule 2 (ils n'ont pas la puissance suffisante pour cela) mais simplement de compléter la charge des cellules qui sont « en retard » durant la charge principale qui, elle, est assurée par circulation d'un fort courant généré par le chargeur principal 3 à travers toute la chaîne de cellules en série.
- l'unité 7, qui est donc en outre agencée pour contrôler les chargeurs complémentaires pour que chaque chargeur complémentaire charge la cellule à laquelle il est associé en cas de sous charge de cette cellule par rapport à une charge (par exemple la moyenne de charge des cellules ou le maximum de charge parmi toutes les cellules) des autres cellules ou de l'ensemble des cellules ; l'unité 7 est donc agencée pour contrôler le chargeur complémentaire de chaque cellule en fonction de la charge de cette cellule et/ou de la comparaison des charges des cellules. Ainsi, la commande des chargeurs complémentaires 8 est assurée par l'unité 7.

. Chaque cellule a donc son chargeur complémentaire qui lui est associé, qui lui est propre et qui est distinct des chargeurs complémentaires des autres cellules. Pour chaque cellule, le chargeur complémentaire de cette cellule est agencé pour charger cette cellule en cas de retard de charge de cette cellule par rapport aux autres cellules, de préférence jusqu'à un équilibrage de la charge de cette cellule par rapport aux charges des autres cellules.

. Pour plus de précision, chaque chargeur complémentaire (contrôlé par l'unité 7) est agencé pour ne pas fournir de courant complémentaire à la cellule à laquelle il est associé lors d'une mesure de l'intensité du courant Ii passant par cette cellule.

. Le chargeur principal 3 est agencé pour être déconnecté de la batterie en laissant les chargeurs complémentaires connectés à leur cellule 2. Ainsi, ces chargeurs complémentaires 8 offrent également la possibilité de restaurer une batterie 1 totalement déchargée. Par exemple, une batterie lithium ne doit jamais être déchargée au-delà d'une certaine limite (au-delà de l'utilisation de la capacité nominale) où elle risque de se trouver en court-circuit. Cependant, dans certains cas (notamment lorsque la durée de la sous-charge n'est pas excessive) il est possible de réactiver la batterie 1. Cette opération consiste à injecter un très faible courant tout en surveillant la tension de la cellule. Dans 90% des cas la cellule peut être récupérée. Les chargeurs complémentaires offrent cette possibilité, à la simple condition que le chargeur principal 3 soit déconnecté de la batterie.

. En outre, lorsque la source de charge est disponible pour de longues durées et que le chargeur principal 3 n'est pas optimisé pour la technologie (par exemple lithium) de cellule utilisée (réduction du courant en fin de charge notamment) les chargeurs complémentaires 8 permettent de terminer la charge en toute sécurité et de façon parfaitement contrôlée.

. Le dispositif 10 comprend en outre des moyens pour mesurer la tension aux bornes de l'ensemble des cellules, comprenant la somme des moyens 5 pour mesurer la tension aux bornes d'une cellule donnée. L'unité 7 est en outre agencée pour contrôler le chargeur principal 3 en fonction de la charge globale de la batterie (c'est-à-dire de l'ensemble des cellules), déterminée par l'unité 7 typiquement en fonction d'un courant passant à travers les cellules et de la tension aux bornes de l'ensemble des cellules. Cette charge globale peut typiquement être évaluée soit en fonction d'un courant passant à travers les cellules et de la tension aux bornes de l'ensemble des cellules, ou plus simplement en fonction de la tension aux bornes de l'ensemble des cellules mais pas d'un courant passant à travers les cellules, ou encore en sommant les charges mesurées de toutes les cellules. Les moyens 7 pour contrôler le chargeur principal sont de préférence agencés pour arrêter la fourniture du courant de charge principal lorsque la batterie atteint un seuil de fin charge (typiquement entre 95 % et 99,9%, de préférence entre 95% et 99%).

. L'unité 7 est donc un contrôleur de chaque chargeur complémentaire 8 qui est commun à tous les chargeurs complémentaires 8 et au chargeur principal 3.

. Ainsi, selon l'invention, pour toutes les cellules en retard de charge par rapport aux autres cellules, l'unité 7 commande un chargement complémentaire de toutes ces cellules en retard de charge. Chaque chargement complémentaire d'une cellule est effectué par son chargeur complémentaire spécifique à cette cellule, qui fournit à cette cellule (mais pas aux autres cellules) un courant complémentaire, de manière additionnelle au courant de charge principal. Chaque chargement complémentaire d'une cellule est poursuivi jusqu'à un équilibrage de la charge de cette cellule par rapport aux charges des autres cellules. L'unité 7 arrête chaque chargement complémentaire d'une cellule indépendamment des chargements complémentaires des autres cellules, une fois cette équilibrage atteint pour cette cellule. Pour plus de précision, chaque chargeur complémentaire (contrôlé l'unité 7) ne fournit pas de courant complémentaire à la cellule à laquelle il est associé lors d'une mesure de l'intensité du courant passant par cette cellule.

. De manière astucieuse, les échanges d'informations entre les chargeurs complémentaires via l'unité 7 (pour décider de leur mise en service ou non) et avec les moyens 6 de mesure d'intensité (pour calculer les états de charge) sont assurés par un dispositif de communication en réseau qui permet d'ajouter à volonté des cellules 2 de batterie en fonction du besoin.

. On remarque que chaque cellule 2 dispose de ses propres mesures de tension et de température, mais dispose également de son propre moyen 8 d'équilibrage de charge.

. Chaque chargeur complémentaire à une puissance de charge (typiquement de 10 à 20 Watts) inférieure à la puissance de charge du chargeur principal typiquement de 100 à 200 Watts), typiquement au moins 5 fois voir dix fois inférieure, typiquement de 15 à 20 fois inférieure. Cela est amplement suffisant car les écarts de charge entre cellules de la batterie sont typiquement inférieurs à 1/5ème % voir 1/10ème %, typiquement inférieurs de 1/15ème % à 1/20ème %.

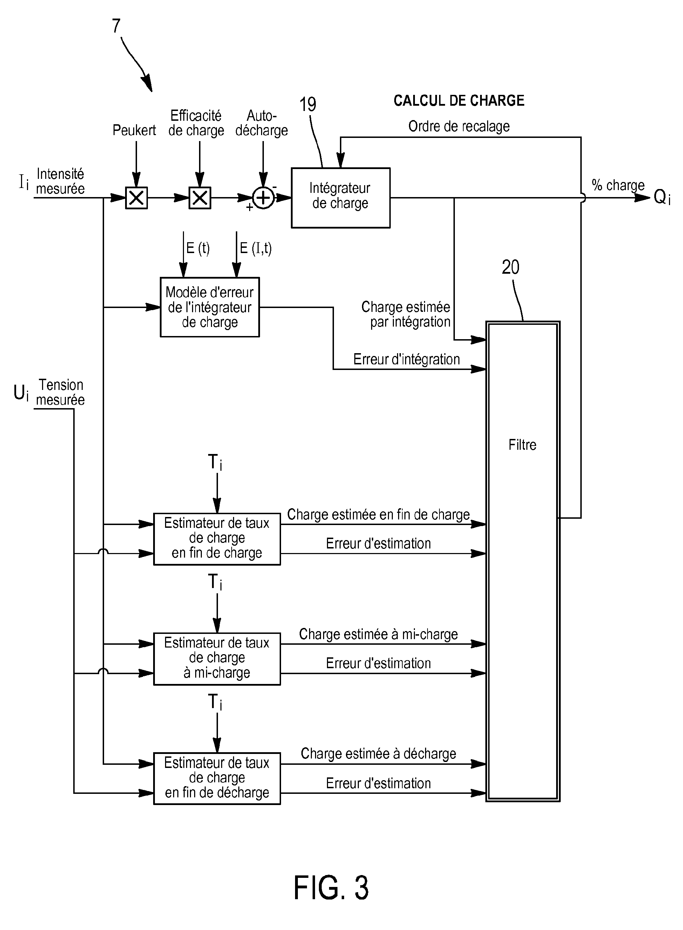

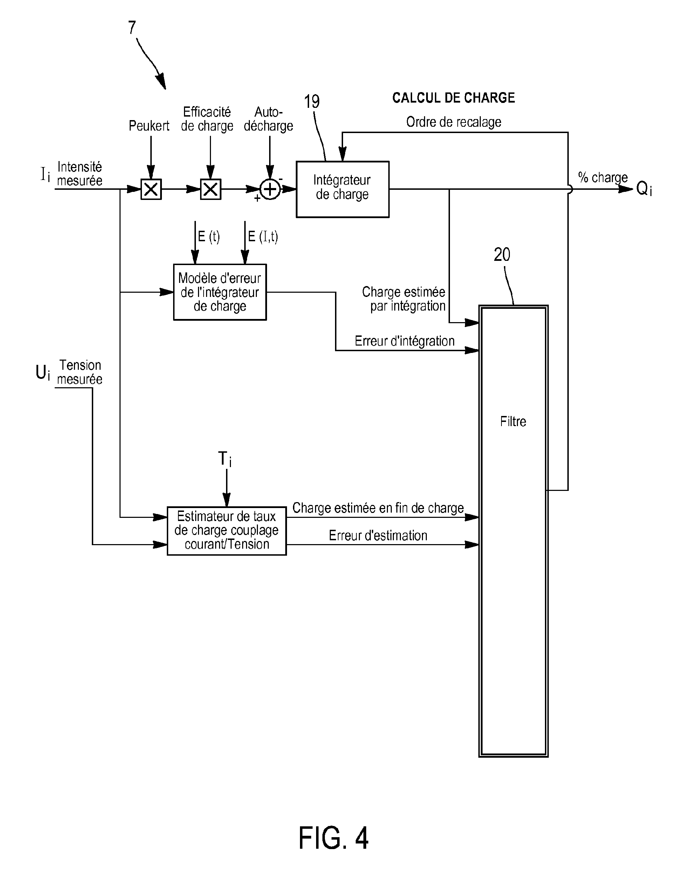

. En référence aux figures 3 et 4, pour chaque cellule, les moyens pour mesurer la charge d'une cellule sont agencés pour mesurer cette charge à partir de l'intensité d'un courant Ii passant à travers cette cellule, par une méthode coulométrique, aussi appelée intégration de coulombs. Autrement dit, pour mesurer la charge d'une cellule, on intègre sur le temps t l'intensité Ii du courant passant par cette cellule. Cette intégration est effectuée par un intégrateur 19. Cette intégration de coulombs est corrigée par divers facteurs :

- en charge de la cellule, l'intensité est simplement affectée d'un facteur correctif « Efficacité de charge », rapport entre charge réellement stockée et charge reçue.
- En décharge le calcul de charge perdue est effectué selon la loi de Peukert : $Qi = t \times Ii^n$ où n est le coefficient de Peukert (=1 pour une batterie parfaite),
- Enfin, en charge ou en décharge, la charge de la cellule est en permanence diminuée d'un facteur constant, l' « autodécharge » exprimé en % de capacité par millier d'heures.

. En parallèle à cette intégration de charge est effectué une détermination d'erreur d'intégration. Hors recalage, l'erreur d'intégration augmente avec le temps, d'autant plus vite que les intensités en jeu sont grandes. Ce calcul est basé sur un modèle très simple à deux variables :

- Une dérive permanente de l'intégrateur E(t), due par exemple à une erreur de zéro sur les mesures de courant,
- Une dérive proportionnelle au courant mesuré E(I, t), due à une erreur de facteur d'échelle des mesures de courant.

. En référence aux figures 3 et 4, pour chaque cellule, les moyens 7 pour mesurer la charge d'une cellule sont en outre agencés pour mesurer cette charge à partir de l'intensité d'un courant passant à travers cette cellule et de la tension aux bornes de cette cellule, par au moins une méthode par couple de courant et tension. On va décrire par la suite deux variantes de mesure de charge de cette cellule par au moins une méthode par couple de courant et tension.

. Dans ce mode de réalisation de l'invention, toute courbe ou tableau de valeurs mémorisé dans l'unité 7 correspond soit à des données fournies par le constructeur ou fournisseur de la batterie 1 ou des cellules 2, soit à des données empiriques acquises et mesurées par des tests effectuées sur une (ou des) batterie(s) du même type que la batterie 1 ou sur une (ou des) cellule(s) du même type qu'une cellule 2.

. 1ère variante

. En référence à la figure 3, dans une première variante, l'unité 7 est agencée pour mesurer cette charge de cellule à partir de l'intensité Ii d'un courant passant à travers cette cellule et de la tension Ui aux bornes de cette cellule, et de la température Ti de cette cellule, par trois méthodes par couple de courant et tension. Chaque méthode par couple de courant et tension correspond à un contrôle permanent selon l'état de charge de la cellule. Ainsi, en parallèle à l'intégration de charge sont effectués trois contrôles permanents selon l'état de charge de la cellule :

- cellule en fin de décharge ;
- cellule à mi-charge ;
- cellule en fin de charge.

. On attache un modèle de cellule différent à chacun de ces états.

. Pour un état de cellule en fin de décharge (c'est-à-dire ayant un taux de charge compris entre 0% et X, avec X typiquement compris entre 5% et 15%), l'unité 7 modélise la cellule par un accroissement de résistance interne Ri de la cellule augmentant linéairement avec le taux de décharge de cette cellule. L'estimation de résistance interne donne une valeur de taux de charge, d'autant plus précise que le taux de charge est faible. On obtient ainsi l'erreur attachée à cette estimation. Par exemple, l'unité 7 reçoit la tension Ui aux bornes de la cellule, le courant Ii passant par cette cellule. L'unité 7 a en outre stocké dans une mémoire la valeur de la force électro motrice Vnom(Ti) en fin de décharge (aussi appelée « f.e.m. » ou « tension à vide » ou « tension nominale ») de la cellule en fonction de la température de Ti de la cellule, sous la forme d'un tableau de valeurs par exemple. L'unité 7 en déduit la valeur de la résistance interne Ri de la cellule, uniquement en fonction des mesures de Ui, Ii et Ti par une loi d'Ohm:

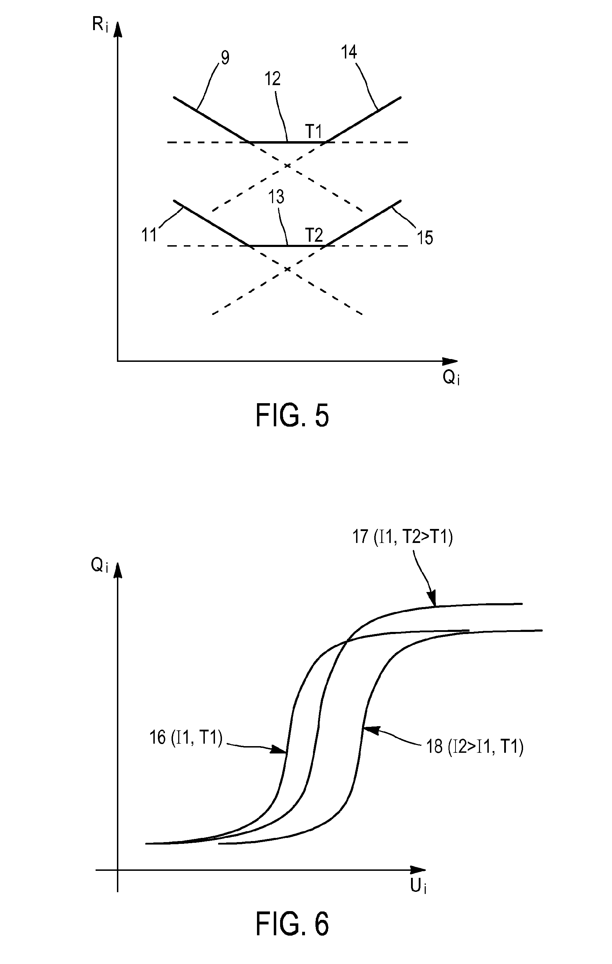

$$Ri(Ui, Ii, Ti) = \frac{Ui - Vnom(Ti)}{Ii}$$ . Ensuite, l'unité 7 calcule la valeur de la charge Qi (par exemple sous la forme d'un taux de charge) qui dépend linéairement de la résistance interne Ri et qui dépend aussi de la température Ti : $Qi(Ri,Ti) = Qi(Ui,Ii,Ti) = \alpha(Ti).Ri + \beta(Ti)$ avec $\alpha(Ti)$ le coefficient directeur qui dépend de la température Ti et $\beta(Ti)$ la « constante » à une température donnée. La dépendance de $\alpha(Ti)$ et $\beta(Ti)$ avec la température est stockée dans l'unité 7 sous la forme de tableaux de valeurs. La figure 5 illustre la droite 9 illustrant la dépendance linaire entre Ri et Qi pour une température Ti=T1 pour un état de cellule en fin de décharge, et la droite 11 illustre la dépendance linaire entre Ri et Qi pour une température Ti= T2>T1 pour un état de cellule en fin de décharge. L'erreur du taux de charge Qi est d'autant plus importante que Qi est grand, et est par exemple déterminé via un tableau de valeurs mémorisé dans l'unité 7 et reliant Qi à cette erreur.

. Pour un état de cellule à mi-charge, c'est-à-dire ayant un taux de charge intermédiaire entre la fin de décharge et la fin de charge (c'est-à-dire ayant un taux de charge compris entre X et Y, avec X typiquement compris entre 5% et 15%, et Y typiquement compris entre 80% et 90%) la cellule est considérée comme ayant une résistance interne Ri fixe pour une température Ti donnée, mémorisée dans l'unité 7 sous la forme d'un tableau de valeurs, mais une force électro motrice Vnom variable.

La mesure de Vnom donne une bonne approximation du taux de charge pourvu que les conditions de fonctionnement de la cellule soient favorables. Un estimateur d'erreur, utilisant notamment les mesures d'intensité, donne le degré de validité de cette mesure. Par exemple, on mesure Vnom en fonction de la mesure de Ti, Ui et Ii, en considérant Ri comme une constante par rapport à Ui et Ii et ne dépendant que de Ti : $Vnom(Ui,Ii,Ti)=Ri(Ti).Ii+Ui$ La figure 5 illustre la droite 12 illustrant la dépendance constante entre Ri et Qi pour une température Ti=T1 pour un état de cellule à mi-charge, et la droite 13 illustre la dépendance constante entre Ri et Qi pour une température Ti= T2>T1 pour un état de cellule à mi-charge. La charge Qi est par exemple déterminée via un tableau de valeurs mémorisé dans l'unité 7 et reliant Qi à Vnom. L'erreur du taux de charge Qi est par exemple déterminée via un tableau de valeurs mémorisé dans l'unité 7 et reliant Ii à cette erreur.

. Pour un état de cellule en fin de charge (c'est-à-dire ayant un taux de charge compris entre Y et 100%, avec Y typiquement compris entre 80% et 90%), comme en fin de décharge, on considère que la résistance interne de la cellule augmente (à condition bien entendu que la cellule soit bien en charge et à un régime suffisant). On obtient là encore une estimation de taux de charge attachée à une erreur dépendant du taux de charge (plus le recalage s'effectue près de la fin de charge plus celui-ci est précis car les paramètres caractéristiques varient alors très vite et sont facilement identifiables) et de l'intensité de charge. Par exemple, l'unité 7 reçoit la tension Ui aux bornes de la cellule, le courant Ii passant par cette cellule. L'unité 7 a en outre stocké dans une mémoire la valeur de la force électro motrice Vnom(Ti) en fin de charge (aussi appelée « f.e.m. » ou « tension à vide » ou « tension nominale ») de la cellule en fonction de la température de Ti de la cellule, sous la forme d'un tableau de valeurs par exemple. L'unité 7 en déduit la valeur de la résistance interne Ri de la cellule, uniquement en fonction des mesures de Ui, Ii et Ti par une loi d'Ohm:

$$Ri(Ui, Ii, Ti) = \frac{Ui - Vnom(Ti)}{Ii}$$ . Ensuite, l'unité 7 calcule la valeur de la charge Qi (par exemple sous la forme d'un taux de charge) qui dépend linéairement de la résistance interne Ri et qui dépend aussi de la température Ti : $Qi(Ri,Ti) = Qi(Ui,Ii,Ti) = \gamma(Ti).Ri + \delta(Ti)$ avec $\gamma(Ti)$ le coefficient directeur qui dépend de la température Ti et $\delta(Ti)$ la « constante » à une température donnée. La dépendance de $\gamma(Ti)$ et $\delta(Ti)$ avec la température est stockée dans l'unité 7 sous la forme de tableaux de valeurs. La figure 5 illustre la droite 14 illustrant la dépendance linaire entre Ri et Qi pour une température Ti=T1 pour un état de cellule en fin de charge, et la droite 15 illustre la dépendance linaire entre Ri et Qi pour une température Ti= T2>T1 pour un état de cellule en fin de charge. L'erreur du taux de charge Qi est d'autant plus importante que Qi est petit, et est par exemple déterminé via un tableau de valeurs mémorisé dans l'unité 7 et reliant Qi à cette erreur.

. Chaque estimation de la charge Qi selon l'état de charge de la cellule par une méthode de couple courant et tension est appelée « valeur de recalage ».

. Chaque erreur attachée à une estimation de la charge Qi selon l'état de charge de la cellule par une méthode de couple courant et tension est appelée « erreur de recalage ».

. 2ème variante

. En référence à la figure 4, dans une deuxième variante, l'unité 7 est agencée pour mesurer la charge Qi d'une cellule à partir de l'intensité Ii d'un courant passant à travers cette cellule et de la tension Ui aux bornes de cette cellule, et de la température Ti de cette cellule, par une unique méthode par couple de courant et tension.

. Cette estimation de la charge Qi par une méthode de couple courant et tension est appelée « valeur de recalage ».

. L'erreur attachée à cette estimation de la charge Qi par une méthode de couple courant et tension est appelée « erreur de recalage ».

. Dans cette deuxième variante, Qi est déterminée par l'unité 7 au moyen de courbes ou de tableaux de valeurs mémorisés dans l'unité 7 reliant Qi à différentes valeurs de Ui, Ii et Ti. Sur la figure 6 :

- la courbe 16 illustre la dépendance entre Qi et Ui pour une température Ti=T1 et une intensité Ii=I1,
- la courbe 17 illustre la dépendance entre Qi et Ui pour une température Ti=T2>T1 et une intensité Ii=I1,
- la courbe 18 illustre la dépendance entre Qi et Ui pour une température Ti=T1 et une intensité Ii=I2>I1.

. 1ère et 2ème variante

. Quelque soit la variante choisie, l'unité 7 est en outre agencée pour corriger la mesure de la charge d'une cellule par la méthode coulométrique en fonction de l'au moins une méthode de mesure de la charge de cette cellule par couple de courant et tension, en corrigeant de la manière suivante la mesure coulométrique de la charge en fonction d'une comparaison d'une erreur d'estimation de la charge par la méthode coulométrique et d'une erreur d'estimation de la charge par chaque méthode par couple de courant et tension.

. Un filtre optimal 20 effectue le tri entre toutes les sources d'informations de mesure de Qi affectées de leur erreur, c'est-à-dire entre la mesure de la charge d'une cellule par la méthode d'intégration coulométrique affectée de son erreur d'intégration et la mesure de la charge cette cellule par l'au moins une méthode de mesure de la charge de cette cellule par couple de courant et tension affectée de son erreur de recalage respective. Lorsque l'erreur d'intégration devient plus forte qu'une des erreurs de recalage le filtre provoque une dérive accélérée de l'intégrateur 19 afin de :

- rapprocher sa valeur de sortie de Qi vers la valeur de recalage
- réduire conséquemment son erreur d'intégration ; le processus s'arrête dès que l'erreur d'intégration redevient inférieure à toutes les erreurs de recalage.

. L'invention permet d'exploiter toutes les opportunités de recalage et donc de ne le faire que lorsque les conditions sont favorables ou lorsque le régime d'intégration pure a duré trop longtemps pour rester précis.

. Bien sûr, l'invention n'est pas limitée aux exemples qui viennent d'être décrits et de nombreux aménagements peuvent être apportés à ces exemples sans sortir du cadre de l'invention.

**Revendications**

1. Dispositif (10) de gestion de charge d'une batterie (1) munie de plusieurs cellules (2), chaque cellule ayant sa propre capacité et sa propre charge, **caractérisé en ce qu'il** comprend :

    - pour chaque cellule, des moyens pour mesurer (5, 6, 7) la charge de cette cellule, au moins en fonction de l'intensité d'un courant passant à travers cette cellule
    - des moyens (7) pour comparer les charges mesurées des cellules.

2. Dispositif selon la revendication 1, **caractérisé en ce que** les moyens pour mesurer la charge d'une cellule sont agencés pour mesurer cette charge à partir de l'intensité du courant passant à travers cette cellule et de la tension aux bornes de cette cellule, par au moins une méthode par couple de courant et tension.

3. Dispositif selon la revendication 1 ou 2, **caractérisé en ce que** les moyens pour mesurer la charge d'une cellule sont agencés pour mesurer cette charge à partir de l'intensité du courant passant à travers cette cellule, par une méthode coulométrique.

4. Dispositif selon la revendication 3 considéré comme dépendante de la revendication 2, **caractérisé en ce qu'il** comprend des moyens (7, 20) agencés pour corriger la mesure de la charge d'une cellule par une méthode coulométrique en fonction de la mesure de la charge de cette cellule par l'au moins une méthode par couple de courant et tension.

5. Dispositif selon l'une quelconque des revendications précédentes, **caractérisé en ce qu'il** comprend en outre :

    - un chargeur principal (3) agencé pour charger de manière globale toutes les cellules en leur fournissant un courant de charge principal commun à toutes les cellules, et
- pour chaque cellule, un chargeur complémentaire (8) agencé pour charger spécifiquement cette cellule en lui fournissant un courant complémentaire.

6. Dispositif selon la revendication 5, **caractérisé en ce que** le chargeur complémentaire d'une cellule est agencé pour charger cette cellule en cas de retard de charge de cette cellule par rapport aux autres cellules.

7. Dispositif selon la revendication 5 ou 6, **caractérisé en ce qu'il** comprend des moyens (7) pour contrôler le chargeur principal en fonction de la charge globale de l'ensemble des cellules.

8. Dispositif selon l'une quelconque des revendications 5 à 7, **caractérisé en ce qu'il** comprend, pour chaque cellule, un contrôleur pour contrôler le chargeur complémentaire de cette cellule en fonction d'un résultat de mesure de charge de cette cellule et/ou de comparaison des charges des cellules, et **en ce que** le contrôleur de chaque chargeur complémentaire est commun à tous les chargeurs complémentaires.

9. Dispositif selon l'une quelconque des revendications 5 à 8, **caractérisé en ce que** chaque chargeur complémentaire à une puissance de charge inférieure à la puissance de charge du chargeur principal, typiquement au moins dix fois inférieure.

10. Procédé de gestion d'une batterie (1) munie de plusieurs cellules (2), chaque cellule ayant sa propre capacité et sa propre charge, **caractérisé en ce qu'il** comprend :

   - pour chaque cellule, une mesure de la charge de cette cellule au moins en fonction de l'intensité d'un courant passant à travers cette cellule,
   - une comparaison des charges mesurées des cellules.

FIG. 1
Art Antérieur

FIG. 2

FIG. 3

7

Peukert  Efficacité  Autode charge  décharge

19  CALCUL DE CHARGE
Ordre de recalage

$I_i$ Intensité
mesurée

$\times$  $\times$  $\oplus$  Intégrateur
de charge

% charge $Q_i$

E (t)  E (I,t)

Modèle d'erreur
de l'intégrateur
de charge

20

Charge estimée
par intégration

Erreur d'intégration

$U_i$ Tension
mesurée

Filtre

$T_i$

Estimateur de taux
de charge couplage
courant/Tension

Charge estimée en fin de charge

Erreur d'estimation

FIG. 4

EP 2 621 051 A1

FIG. 5

FIG. 6

15

Europäisches
Patentamt

European
Patent Office

Office européen
des brevets

## RAPPORT DE RECHERCHE EUROPEENNE

Numéro de la demande

EP 13 15 2501

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (IPC) |
| X<br>Y | US 2011/241622 A1 (LI GUOXING [US] ET AL)<br>6 octobre 2011 (2011-10-06)<br>* alinéa [0002] - alinéa [0003] *<br>* alinéa [0130] - alinéa [0131] *<br>----- | 1,10<br><br>2-9 | INV.<br>H02J7/00<br>G01R31/36 |
| Y | US 6 359 419 B1 (VERBRUGGE MARK WILLIAM [US] ET AL) 19 mars 2002 (2002-03-19)<br>* abrégé *<br>* colonne 2, ligne 28 - ligne 41 *<br>* colonne 4, ligne 25 - colonne 5, ligne 53 *<br>----- | 2-4 | |
| Y | US 2011/241623 A1 (WADE JOHN M [US] ET AL)<br>6 octobre 2011 (2011-10-06)<br>* le document en entier *<br>----- | 5-9 | |
| X | US 2003/146737 A1 (KADOUCHI EIJI [JP] ET AL) 7 août 2003 (2003-08-07)<br>* revendication 1 *<br>----- | 1,10 | |
| A | WO 2008/137764 A1 (SENDYNE CORP [US]; OKUTO TADASHI [US]; MILIOS IOANNIS [US]) 13 novembre 2008 (2008-11-13)<br>* abrégé; figure 4 *<br>----- | 5-9 | DOMAINES TECHNIQUES RECHERCHES (IPC)<br><br>H02J<br>G01R |

Le présent rapport a été établi pour toutes les revendications

| Lieu de la recherche | Date d'achèvement de la recherche | Examinateur |
|---|---|---|
| Munich | 15 mars 2013 | Annibal, Stewart |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 15 2501

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-03-2013

| Document brevet cité au rapport de recherche | Date de publication | Membre(s) de la famille de brevet(s) | Date de publication |
|---|---|---|---|
| US 2011241622 A1 | 06-10-2011 | CN 102468673 A<br>US 2011241622 A1 | 23-05-2012<br>06-10-2011 |
| US 6359419 B1 | 19-03-2002 | JP 3571026 B2<br>JP 2002305039 A<br>US 6359419 B1 | 29-09-2004<br>18-10-2002<br>19-03-2002 |
| US 2011241623 A1 | 06-10-2011 | AUCUN | |
| US 2003146737 A1 | 07-08-2003 | JP 3867581 B2<br>JP 2003219572 A<br>US 2003146737 A1<br>US 2005266303 A1 | 10-01-2007<br>31-07-2003<br>07-08-2003<br>01-12-2005 |
| WO 2008137764 A1 | 13-11-2008 | AUCUN | |

EPO FORM P0460

Pour tout renseignement concernant cette annexe : voir Journal Officiel de l'Office européen des brevets, No.12/82